# EUROPÄISCHE PATENTSCHRIFT

(11) **EP 1 977 159 B1**
(45) Veröffentlichungstag und Bekanntmachung des Hinweises auf die Patenterteilung: **30.08.2017**
(21) Anmeldenummer: 07702938.7
(22) Anmeldetag: 23.01.2007
(51) Int. Cl.: B60Q 3/00, B60Q 1/04, F21S 8/10, F21V 15/01, F21V 23/00

(54) **LEUCHTE**
LUMINAIRE
ÉCLAIRAGE

(30) Priorität: 26.01.2006 DE 102006003666
(43) Veröffentlichungstag der Anmeldung: 08.10.2008
(73) Patentinhaber: Bayerische Motoren Werke Aktiengesellschaft, 80809 München (DE)
(72) Erfinder: STAEBE, Jens, 80995 Muenchen (DE)
(74) Vertreter: Mayer-Martin, Christian
(86) Internationale Anmeldenummer: PCT/EP2007/000525
(87) Internationale Veröffentlichungsnummer: WO 2007/085404

(56) Entgegenhaltungen:
- WO-A1-2006/104553
- DE-A1- 3 726 319
- DE-A1- 4 415 885
- DE-A1- 10 146 475

## Beschreibung

Die Erfindung betrifft eine Leuchte, insbesondere eine Fahrzeug-Leuchte, eine Blinkleuchte, eine Rückleuchte, eine Innenleuchte oder einen Scheinwerfer. Eine gattungsbildende Leuchte ist beispielsweise aus DE-A-4 415 885 bekannt. Die rasante technologische Entwicklung auf dem Gebiet der Kraftfahrzeugbeleuchtungstechnik führt zu Leuchten, welche immer weniger Bauraum erfordern und so neue Design-Freiheitsgrade schaffen. Dazu werden in zunehmendem Maße halbleiterbasierte Leuchtdioden eingesetzt, deren Wirkungsgrad allerdings mit zunehmender Temperatur abnimmt. Gerade bei kleinen Bauformen ist es aber schwierig, die in der Leuchte produzierte Abwärme abzuführen.

Der Erfindung liegt nun die Aufgabe zu Grunde, eine Leuchte anzugeben, die bei geringen Abmessungen effizient und mit verbessertem Wärmemanagement betrieben werden kann.

Diese Aufgabe wird durch die Merkmale des Hauptanspruchs gelöst. Vorteilhafte Weiterbildungen der Erfindung sind den abhängigen Ansprüchen zu entnehmen.

Die Erfindung basiert demnach auch auf dem Gedanken, eine Leuchte, insbesondere eine Fahrzeugleuchte, wie eine Blinkleuchte, einen Scheinwerfer, eine Innenleuchte oder eine Rückleuchte, mit einem Leuchtengehäuse auszustatten, das zumindest teilweise aus metallisierbarem Kunststoff besteht. Eine Lichtquelle, welche vorzugsweise zumindest eine Leuchtdiode umfasst, ist zumindest teilweise in dem Leuchtengehäuse angeordnet. Leiterbahnen, welche insbesondere zur Stromversorgung der Lichtquelle vorgesehen sind, werden unmittelbar, insbesondere ohne Verwendung einer Platine, durch den metallisierbaren Kunststoff des Leuchtengehäuses getragen.

Dadurch wird erreicht, dass durch die Leiterbahnen produzierte oder transportierte Abwärme nahezu optimal an das Leuchtengehäuse abgegeben werden kann.

Vorzugsweise wird die Lichtquelle ebenfalls unmittelbar, insbesondere ohne Verwendung einer Platine, durch den metallisierbaren oder metallisierten Kunststoff des Leuchtengehäuses getragen, so dass auch Abwärme von der Lichtquelle optimal an das Leuchtengehäuse abgegeben werden kann.

Das Leuchtengehäuse ist gerade im Fahrzeugbereich eine besonders vorteilhafte Wärme-Senke, da diese die Wärme selbst wieder gut abgeben kann, beispielsweise an die Fahrzeugkarosserie oder, beispielsweise bei der Verwendung der Erfindung in einer Frontblinkleuchte eines Motorrades, an die Umgebungsluft.

Vorzugsweise sind die Leiterbahnen durch Metallisierungsflächen gebildet, welche unmittelbar durch das Gehäuse, insbesondere den metallisierbaren Kunststoff des Gehäuses, getragen werden.

Besonders bevorzugt sind die Leiterbahnen derart ausgestaltet, dass sie als optischer Reflektor und/oder Wärmereflektor für die Leuchtquelle wirken. Dazu können Metallisierungsflächen, welche vorzugsweise gleichzeitig Leiterbahnen bilden, und das die Metallisierungsflächen tragende Leuchtengehäuse derart ausgestaltet sein, dass die Metallisierungsflächen eine konkave oder eine nach innen bzw. einwärts gewölbte Oberfläche aufweisen.

Dadurch können der Reflektor und/oder die Leiterbahnen neben ihrer eigentlichen Wirkung zusätzlich als Kühlmittel wirken. Dies gilt insbesondere dann, wenn die innen liegende Rückseite des Leuchtengehäuses zu mehr als 50 Prozent, zu mehr als 60 Prozent, zu mehr als 70 Prozent, zu mehr als 80 Prozent oder zu mehr als 90 Prozent mit Metallisierungsflächen bedeckt ist, welche ganz oder teilweise als Leiterbahn und/oder Reflektor wirken.

Nach einer bevorzugten Ausführungsform ist die Leuchtquelle derart angeordnet und ausgerichtet, dass sie in Richtung des genannten Reflektors abstrahlt, welcher dann lichtverteilend und/oder lichtlenkend wirkt.

Die Kühlung der Leuchte kann noch verbessert werden, wenn die außen liegende Rückseite des Leuchtengehäuses zumindest teilweise in Form von Kühlstrukturen, wie beispielsweise Kühlrippen, ausgeführt ist. Eine Kühlstruktur dient dabei der Vergrößerung der Oberfläche der Außenseite des Leuchtengehäuses.

Vorzugsweise sind die Kühlstrukturen beispielsweise bei der Verwendung der Erfindung in einer Frontblinkleuchte eines Motorrades aerodynamisch günstig ausgeführt.

Besonders effizient kann die Erfindung eingesetzt werden, wenn die Rückseite des Leuchtengehäuses einstückig und/oder einstoffig als metallisierbarer Kunststoff ausgeführt ist. Dadurch wird auch eine besonders wirtschaftliche Herstellung einer Leuchte ermöglicht.

Vorzugsweise basieren das Leuchtengehäuse und die Metallisierungsflächen auf einer Molded Interconnect Device-Technologie.

Um die durch das Vorschaltelement produzierte Abwärme noch wirkungsvoller von der Leuchtquelle fernzuhalten, ist ein Leuchtenfuß vorgesehen, der vorzugsweise einstückig mit dem Leuchtengehäuse, und vorzugsweise abgesetzt von dem Leuchtengehäuse gebildet ist, wobei zumindest ein Vorschaltelement zur Anpassung der Stromversorgung an die Leuchtquelle in dem Leuchtenfuß integriert ist. Der Leuchtenfuß ist dabei vorzugsweise auch aus metallisierbarem Kunststoff gebildet.

Vorzugsweise sind eine Metallisierungsfläche und ein die Metallisierungsfläche tragender Gehäuseabschnitt, welcher aus metallisierbarem Kunststoff besteht, derart ausgestaltet, dass die Metallisierungsfläche einen Stecker oder ein Steckerelement bzw. eine Buchse oder ein Buchsenelement bilden. Dadurch wird die Herstellung der Leuchte erleichtert und der Wärmetransport von der Leuchte beispielsweise auf einen Leuchtenträger weiter verbessert.

Im Folgenden wird die Erfindung anhand von Beispielen unter Bezugnahme auf die folgenden Figuren näher erläutert:

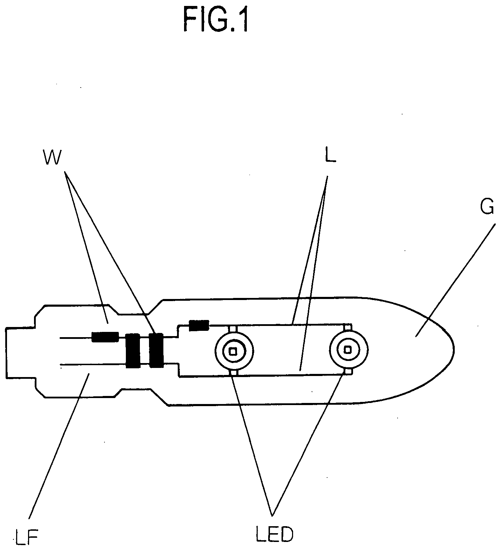

- Figuren 1 bis 4: zeigen vereinfachte Schnittdarstellungen verschiedener Ausführungsbeispiele einer Leuchte.

Figur 1 zeigt als Leuchte eine Motorrad-Leuchtdioden-Blinkleuchte in Schnittdarstellung von vorne.

Die Leuchte umfasst ein Leuchtengehäuse G aus metallisierbarem Kunststoff, welches unmittelbar Metallisierungsflächen trägt, durch welche Leiterbahnen L gebildet werden. Ebenfalls unmittelbar wird durch das Leuchtengehäuse G die Leuchtquelle getragen, welche hier aus zwei direkt mit dem metallisierbaren Kunststoff verbundenen Leuchtdioden LED besteht.

Vorschaltwiderstände W sind ebenfalls direkt mit dem metallisierbaren oder metallisierten Kunststoff verbunden. Die Vorschaltwiderstände oder, wie in diesem Beispiel, ein Vorschaltwiderstand W sind in einem Leuchtenfuß LF integriert, der ebenfalls aus metallisierbarem Kunststoff, vorzugsweise einstückig mit dem Leuchtengehäuse G, gebildet ist und das Leuchtengehäuse G ergänzt oder einen Bestandteil des Leuchtengehäuses G bildet.

Vorzugsweise umgibt und/oder umschließt der Leuchtenfuß LF den oder die Vorschaltwiderstände W unmittelbar, so dass eine optimale Wärmeabfuhr von Vorschaltwiderständen W auf den Leuchtenfuß LF realisiert wird.

Der Leuchtenfuß LF ist durch eine Verjüngung von dem Leuchtengehäuse G oder von dem Hauptbestandteil des Leuchtengehäuses G abgesetzt, um den Wärmetransfer von einem Vorschaltwiderstand W über den Leuchtenfuß LF auf die Leuchtdioden LED zu verringern.

Die Realisierung der Leuchte, insbesondere der metallisierbare Kunststoff, die Metallisierungsflächen und deren Verbindung miteinander, basiert vorzugsweise auf der an sich bekannten Molded Interconnect Devices - Technologie. Molded Interconnect Devices (MIDs) sind üblicherweise spritzgegossene Kunststoffteile, welche elektrische Leiterbahnen oder elektronische Bauteile unmittelbar, insbesondere ohne zusätzliche Trägermaterialien, tragen.

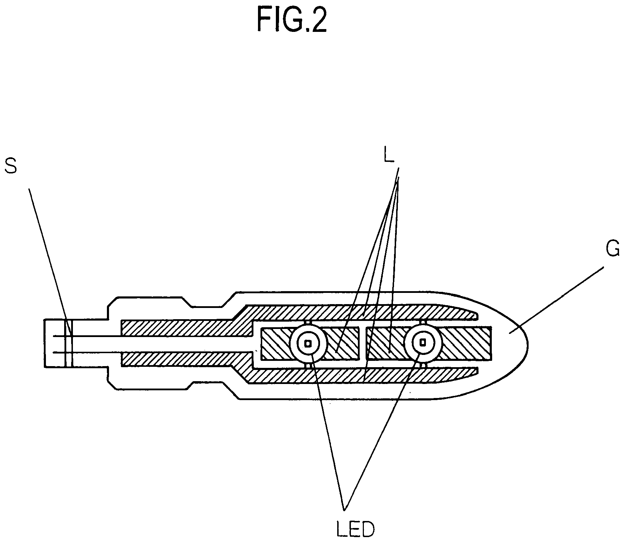

Figur 2 zeigt ebenfalls eine Motorrad-Leuchtdioden-Blinkleuchte in Schnittdarstellung von vorne.

Die Leuchte umfasst ein Leuchtengehäuse G, durch welches unmittelbar Leiterbahnen L, die Lichtquelle LED und Steckerkontakte S getragen werden. Die Leiterbahnen sind in diesem Ausführungsbeispiel breiter ausgeführt, so dass sie einen großen Teil der innen liegenden Rückseite des Leuchtengehäuses G bedecken, das vorzugsweise nach innen gewölbt ausgeführt ist. Durch diese breitere Ausführung der Leiterbahnen werden die reflektierende Wirkung und die wärmeabführende Wirkung der Leiterbahnen verstärkt.

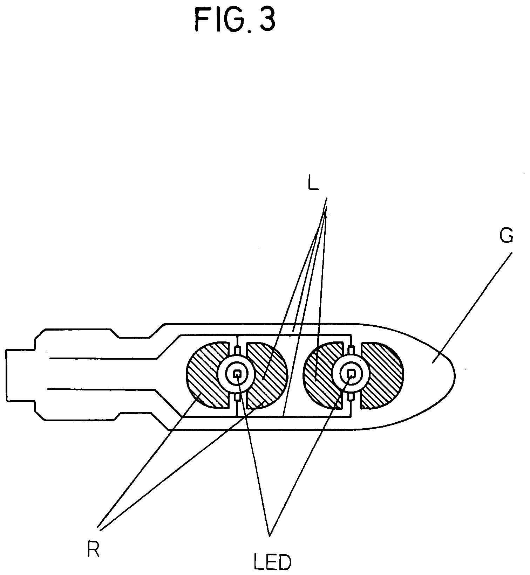

Auch in Figur 3 ist eine Motorrad-Leuchtdioden-Blinkleuchte in Schnittdarstellung von vorne dargestellt.

Das Leuchtengehäuse G trägt hier unmittelbar Metallisierungsflächen R, welche als Reflektor für die Lichtquelle LED und vorzugsweise nicht als Leiterbahn für die Stromversorgung der Lichtquelle LED wirken.

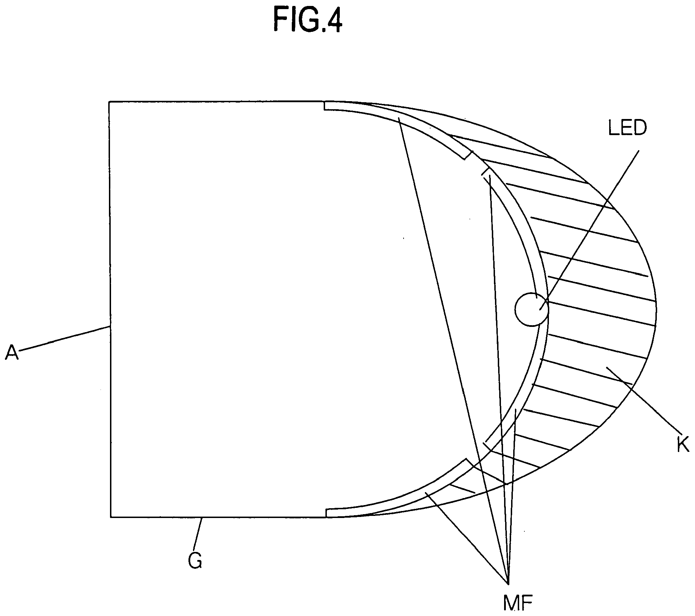

Figur 4 zeigt eine Motorrad-Leuchtdioden-Blinkleuchte in Schnittdarstellung von der Seite.

Die Leuchte umfasst ein Leuchtengehäuse G, durch welches unmittelbar Metallisierungsflächen MF und die Lichtquelle LED getragen werden. Die Metallisierungsflächen MF bedecken in diesem Beispiel mehr als 60 Prozent der konkav gebildeten innen liegenden Rückseite des Leuchtengehäuses G. Die Metallisierungsflächen MF bilden Leiterbahnen und/oder Reflektoren.

Die außen liegende Rückseite der Leuchte ist durch Kühlrippen K gebildet.

An der Vorderseite wird die Leuchte oder das Leuchtengehäuse G durch eine transparente Abdeckscheibe A abgeschlossen.

## Patentansprüche

1. Leuchte
mit einem Leuchtengehäuse (G), das zumindest teilweise aus metallisierbarem Kunststoff besteht,
mit einer im Leuchtengehäuse (G) angeordneten Leuchtquelle (LED), mit Leiterbahnen (L), die unmittelbar durch den metallisierbaren Kunststoff des Leuchtengehäuses (G) getragen werden, zur Stromversorgung der Leuchtquelle (LED), **gekennzeichnet durch** einen Leuchtenfuss, der einstückig mit dem Leuchtengehäuse und abgesetzt von dem Leuchtengehäuse (G) gebildet ist, mit zumindest einem Vorschaltelement, insbesondere einem Vorschaltwiderstand, zur Anpassung der Stromversorgung an die Leuchtquelle (LED), welcher in dem Leuchtenfuss integriert ist.

2. Leuchte nach Anspruch 1,
bei der die Leiterbahnen (L) durch Metallisierungsflächen gebildet sind, welche unmittelbar durch das Leuchtengehäuse (G) getragen werden.

3. Leuchte nach einem der vorhergehenden Ansprüche,
bei der Leiterbahnen (L) derart ausgestaltet, dass sie als Reflektor für die Leuchtquelle (LED) wirken.

4. Leuchte nach einem der vorhergehenden Ansprüche,
bei der zumindest eine Metallisierungsfläche und das die Metallisierungsfläche tragende Leuchtengehäuse (G) derart ausgestaltet sind, dass die Metallisierungsfläche eine konkave Oberfläche aufweist.

5. Leuchte nach einem der vorhergehenden Ansprüche,
bei der Leiterbahnen (L) derart ausgestaltet sind, dass sie als Kühlmittel wirken.

6. Leuchte nach einem der vorhergehenden Ansprüche,
bei der die innen liegende Rückseite des Leuchtengehäuses (G) zu mehr als 50 Prozent mit Metallisierungsflächen bedeckt ist.

7. Leuchte nach einem der vorhergehenden Ansprüche,
bei der die außen liegende Rückseite des Leuchtengehäuses (G) zumindest teilweise in Form von Kühlstrukturen ausgeführt ist.

8. Leuchte nach einem der vorhergehenden Ansprüche,
bei der die Rückseite des Leuchtengehäuses (G) einstückig als metallisierbarer Kunststoff ausgeführt ist.

## Claims

1. A luminaire
having a luminaire housing (G), which comprises at least in part metallisable plastic,
having a light source (LED) disposed in the luminaire housing (G), having conductor tracks (L), which are directly supported by the metallisable plastic of the luminaire housing (G), for supplying current to the light source (LED), **characterised by** a luminaire base, which is formed in one piece with the luminaire housing and offset from the luminaire housing (G), having at least one ballast element, more especially a series resistor, for adapting the current supply to the light source (LED) integrated in the luminaire base.

2. A luminaire according to claim 1,
wherein the conductor tracks (L) are formed by metallisation faces, which are directly supported by the luminaire housing (G).

3. A luminaire according to any one of the preceding claims,
wherein the conductor tracks (L) are configured in such a way that they act as reflectors for the light source (LED).

4. A luminaire according to any one of the preceding claims,
wherein at least one metallisation face and the luminaire housing (G) supporting the metallisation face are configured in such a way that the metallisation face has a concave surface.

5. A luminaire according to any one of the preceding claims,
wherein the conductor tracks (L) are configured in such a way that they act as a cooling means.

6. A luminaire according to any one of the preceding claims,
wherein the inner rear side of the luminaire housing (G) is covered to an extent of more than 50% by metallisation faces.

7. A luminaire according to any one of the preceding claims,
wherein the outer rear side of the luminaire housing (G) is configured at least in part in the form of cooling structures.

8. A luminaire according to any one of the preceding claims,
wherein the rear side of the luminaire housing (G) is configured in one piece as metallisable plastic.

## Revendications

1. Lampe comprenant :
un boîtier de lampe (G) réalisé au moins en partie d'un matériau synthétique pouvant être métallisé,
- une source de lumière (LED) montée dans le boîtier de la lampe (G),
- des pistes conductives (L) qui sont directement portées par le matériau synthétique pouvant être métallisé du boîtier de la lampe (G) pour permettre l'alimentation en courant de la source de lumière (LED),
**caractérisé par**
- un pied de lampe qui est réalisé en une seule pièce avec le boîtier de la lampe (G) et séparé de celui-ci, comprenant au moins un élément de régulation de puissance, en particulier une résistance de régulation de puissance permettant d'adapter l'alimentation en courant à la source de lumière (LED) qui est intégrée dans le pied de lampe.

2. Lampe conforme à la revendication 1 dans laquelle les pistes conductives (L) sont formées par des surfaces de métallisation qui sont directement portées par le boîtier de la lampe (G).

3. Lampe conforme à l'une des revendications précédentes dans laquelle les pistes conductives (L) sont conformées de façon à agir en tant que réflecteur pour la source de lumière (LED).

4. Lampe conforme à l'une des revendications précédentes dans laquelle la surface de métallisation et le boîtier de la lampe (G) portant cette surface de métallisation sont réalisés de sorte que la surface de métallisation ait une surface concave.

5. Lampe conforme à l'une des revendications précédentes dans laquelle les pistes conductives (L) sont réalisées de façon à agir en tant qu'agent de refroidissement.

6. Lampe conforme à l'une des revendications précédentes dans laquelle la face arrière du boîtier de la lampe (G) située à l'intérieur est recouverte sur plus de 50 % par des surfaces de métallisation.

7. Lampe conforme à l'une des revendications précédentes dans laquelle la surface arrière située à l'extérieur du boîtier de lampe (G) est réalisée au moins en partie sous la forme de structures de refroidissement.

8. Lampe conforme à l'une des revendications précédentes dans laquelle le côté arrière du boîtier de lampe (G) est réalisé en une seule pièce sous la forme d'un matériau synthétique pouvant être métallisé.
